(19) Europäisches Patentamt
European Patent Office
Office européen des brevets

(11) Numéro de publication: **0 032 864**
**B1**

(12) # FASCICULE DE BREVET EUROPEEN

(45) Date de publication du fascicule du brevet: **25.04.84**

(51) Int. Cl.³: **G 06 F 3/04**

(21) Numéro de dépôt: **81400063.4**

(22) Date de dépôt: **19.01.81**

(54) **Dispositif pour décentraliser la gestion du bus de transfert de données commun à plusieurs unités d'un système de traitement de l'information.**

(30) Priorité: **21.01.80 FR 8001212**

(43) Date de publication de la demande: **29.07.81 Bulletin 81/30**

(45) Mention de la délivrance du brevet: **25.04.84 Bulletin 84/17**

(84) Etats contractants désignés: **DE FR NL**

(56) Documents cités:
**FR - A - 2 316 660**
**FR - A - 2 418 494**
**US - A - 4 096 569**

**COMPUTER DESIGN, vol. 18, no. 11, novembre 1979, Concord (US) HOJBERG: "Queue handling arbiter solves shared resource conflicts", pages 129-135**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Vinot, Daniel René, 94, avenue Gambetta, F-75020 Paris (FR)**

**EP 0 032 864 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

# Dispositif pour décentraliser la gestion du bus de transfert de données commun à plusieurs unités d'un système de traitement de l'information

La présente invention concerne un dispositif pour décentraliser la gestion d'un bus de transfert de données commun à plusieurs unités d'un système de traitement de l'information.

Elle concerne plus particulièrement un système de traitement de l'information comportant plusieurs processeurs individuels et au moins une mémoire centrale à laquelle chaque processeur est connectable par un système de voies de transmission d'information encore dénommées bus, la liaison entre chaque processeur et la mémoire centrale s'effectuant sans l'intermédiaire d'un autre processeur.

Dans un système de traitement de l'information du type spécifié, le bus de transfert a pour but de transmettre les informations entre une unité émettrice et une unité réceptrice du système.

Le système comprend une logique de commande du bus qui prend en charge toutes les demandes émanants des unités et relatives à l'utilisation du bus de transfert. L'utilisation de ce bus s'effectue selon une priorité fixe. Chaque unité reçoit une priorité fixe et en cas de demandes simultanées le circuit prioritaire prend en charge la demande émanant de l'unité ayant la priorité la plus élevée. La logique de commande du bus peut communiquer avec toutes les unités du système afin de fournir certaines informations et certains signaux sur l'état et l'historique du système.

Ce système connu présente au moins deux inconvénients. En cas de panne de la logique de commande du bus, toutes les unités du système s'arrêtent de fonctionner. D'autre part, la mise en communication des unités émettrices et réceptrices s'exécute par un échange de signaux d'adresse et d'accusé de réception qui prend du temps.

Un objet de la présente invention telle qu'elle est caractérisée dans les revendications est de fournir un système de traitement de l'information dans lesquels les inconvénients précités sont éliminés.

Le système représenté à la figure 1 est composé des unités 1, 2 et 3 reliées chacune à un bus B qui leur est commun par les liaisons $l_1$, $l_2$, $l_3$. Chaque unité possède une logique de commande munie d'un même circuit de priorité P. Les demandes de chaque unité de prise de la maîtrise du bus B sont transmises à l'ensemble des autres unités par les circuits de priorité P. Ainsi l'unité 1 avertit les unités 2 et 3 qu'elle est demanderesse par les liaisons $l_2$ et $l_5$, l'unité 2 avertit les unités 1 et 3 par les liaisons $l_1$ et $l_3$ et l'unité 3 avertit les unités 1 et 2 par les liaisons $l_4$ et $l_6$.

Naturellement, à un instant donné, seule l'unité demanderesse qui est la plus prioritaire prend la maîtrise du bus B.

Les unités utilisées peuvent être de différents types comme ceci est représenté à la figure 2.

Sur cette figure, le bus B relie des unités de commande de mémoire MMU12, 13 à différentes antémémoires ou caches $MCU_6$ 8, ou mémoires tampon $MTU_4$ et $MTU_{10}$. Les mémoires tampons $MTU_4$ et $MTU_{10}$ relient les contrôleurs d'entrée-sortie IOC 5 et 11 au bus B alors que les caches 6 et 8 relient respectivement les organes de traitement de l'information ou processeurs 7 et 9 au bus B.

La logique de commande qui est incorporée selon l'invention dans chaque unité est représentée à la figure 3. Cette logique se compose d'un circuit de priorité $P_{12}$, d'un circuit d'éligibilité $T_{13}$ de la demande locale de l'unité dans laquelle le circuit P est situé, et d'un registre STATR14.

Le registre STATR14 reçoit sur son entrée 1 les signaux STAT dont les états représentent la disponibilité des lignes de données du BUS B. La sortie 2 du registre STATR est reliée à l'entrée 1 du circuit d'éligibilité T13 dont l'entrée 2 reçoit la demande $RQ_iL$ locale. Le circuit T délivre sur sa sortie 3 le signal $RQ_iE$ lorsqu'il a pu déterminer que la demande locale était éligible. Le signal $RQ_iE$ est à la fois transmis vers l'entrée i du circuit de priorité P12 et vers les autres logiques de commande des autres unités du système sur la ligne $RQ_k$. Le circuit de priorité P12 délivre sur sa sortie P un signal $RQ_iP$ lorsque la demande locale qui est devenue éligible se trouve être la plus prioritaire, ce signal est alors transmis à l'organe de commande de l'unité locale qui reçoit ainsi l'autorisation de prendre la maîtrise du bus B.

La fonction de la logique de commande est donc de transformer une demande locale en une demande éligible après avoir analysé la disponibilité du bus B de transmission.

La logique de commande reçoit toutes les demandes externes $RQ_k$ sur les entrées l à k du circuit de priorité P12. Les priorités de toutes les demandes externes sont analysées et comparées au niveau de priorité de la demande locale par le circuit de priorité P12. Comme l'analyse s'opère de la même manière dans chaque unité, toutes les unités connaissent ainsi au même instant la demande de l'unité qui est la plus prioritaire.

L'unité qui se reconnaît comme étant la plus prioritaire peut prendre la maîtrise du BUS B par le signal $RQ_i$, P émis par le circuit de priorité P.

Le circuit de priorité P12 est représenté à la figure 4. Dans l'exemple, ce circuit peut analyser jusqu' à 5 demandes $RQ_1$ à $RQ_5$, mais ce nombre pourrait être facilement généralisé à n. Il se compose de 4 portes non ET 16, 18, 20 et 22, les portes 18 et 20 n'étant pas représentées et de 5 portes »ET« 15, 17, 19, 21 et 23, les portes 19 et 21 n'étant pas représentées.

La demande $RQ_1$ est appliquée à l'entrée 1 d'une porte 15 dont la sortie délivre le signal $RQ_1P$. Le signal $RQ_1P$ est appliqué à l'entrée 1 de toutes les portes »non et« 16 à 22. La sortie 2 de la porte »non et« 16 est appliquée à l'entrée 1 de la porte »et« 17 qui reçoit sur son entrée 2 la demande $RQ_2$ et dont la

sortie 3 transmet le signal $RQ_2P$. Ce signal $RQ_2P$ est ensuite transmis à toutes les entrées 2 des portes »non et« 18 à 22. Un cablage identique est à réaliser pour la prise en compte des signaux $RQ_3$ et $RQ_4$ par les circuits non représentés. Le signal $RQ_3P$ obtenu doit être transmis à l'entrée 3 des portes »non et« 20 à 22 et le signal $RQ_4P$ doit être transmis à l'entrée 4 de la porte »non et« 22. La sortie 5 du circuit »non et« 22 est reliée à l'entrée 1 de la porte »et« 23 dont l'entrée 2 reçoit le signal $RQ_5$. La sortie 3 de la porte ET 23 délivre le signal $RQ_5P$. Avec ce circuit, la demande $RQ_5$ est prioritaire dans la mesure où une demande quelconque $RQ_1$ à $RQ_4$ n'est pas présente. Cette condition est vérifiée par l'équation logique:

$$RQ_5P = RQ_5 \cdot (RQ_1P^* + RQ_2P^* + RQ_3P^* + RQ_4P^*)$$

Pour les signaux $RQ_1P$ à $RQ_4P$ les équations suivantes doivent être vérifiées.

$$RQ_4P = RQ_4 \cdot (RQ_1P^* + RQ_2P^* + RQ_3P^*)$$
$$RQ_3P = RQ_3 \cdot (RQ_1P^* + RQ_2P^*)$$
$$RQ_2P = RQ_2 \cdot (RQ_1P^*)$$
$$RQ_1P = RQ_1$$

Les liaisons de la logique de commande avec les organes de commande d'une unité quelconque du système sont représentées à la figure 5. Sur cette figure, la logique de commande est représenté en 12bis. L'unité qui la contient s'organise autour d'un bus d'adresse (BUSA), d'un bus de commande (BUSC) et d'un bus de données (BUSD). Ces différents BUS sont communs avec les éléments correspondants du BUSB. L'organe de commande 24 délivre les signaux de commande nécessaires à la gestion du transfert des informations sur le BUSB lorsque l'unité est devenue maîtresse. Il peut être constitué d'une mémoire morte dans laquelle on aura inscrit le microprogramme nécessaire au séquencement des informations sur le bus B, il sera possible d'utiliser un organe de commande du type de celui qui est décrit dans le livre intitulé »Microprogramming Principles and Practices« Samir S HUSSON-Prentice Hall Inc (1970) Page 189.

L'organe de commande délivre les signaux CMD et STAT sur le BUSC, les commandes $C_1$ et $C_2$ ainsi que le signal de demande locale $RQ_iL$. Il est synchronisé à partir d'une horloge HO commune à tout le système mais non représentée. Un registre d'instruction RI 25 connecté entre l'entrée 1 de l'organe de commande et le bus D permet le branchement sur l'adresse de début des microprogrammes contenus dans l'organe de commande. Cette adresse de début est calculée à partir du code opération de l'instruction contenue dans le registre d'instruction RI.

Les signaux STAT transitent sur le bus C et sont reçus à l'entrée du registre STATR de la logique de commande 12bis. La demande locale $RQ_iL$ est également transmise à l'entrée 2 du circuit T13 de la logique de commande 12bis. Sur le BUSC transitent aussi toutes les demandes RQ faites par les autres unités du système, celles-ci sont appliquées aux entrées 1 à k du circuit de priorité P12 de la logique de commande 12bis. Lorsque l'unité se reconnaît comme étant la prioritaire vis-à-vis des autres demanderesses sa logique de commande délivre le signal $RQ_iP$ qui est alors appliqué à l'entrée 1 de la porte ET33.

Le signal $RQ_iP$ est ensuite pris en compte par un basculeur START par action du signal de commande $C_1$ sur l'entrée 2 de la porte ET33 ou par un basculeur REPONSE par action d'un signal $C_2$ sur l'entrée 2 de la porte ET34. Les basculeurs START et REPONSE servent à initialiser un transfert d'information entre le BUSB et l'unité dans laquelle ils se trouvent. Ces basculeurs sont remis à zéro respectivement par les signaux RS et RR transmis sur le BUSC. Les signaux START et REPONSE correspondant sont naturellement émis sur le BUSC. Le registre 3RDE30 est un registre de données; dans l'exemple, ce registre peut contenir 4 bytes. Ces 4 bytes sont chargés directement à partir du BUSD et peuvent être déchargés sur une longueur quelconque sur le BUSD par le multiplexeur MUX28 commandé par des signaux de cycle $S_2$, $S_3$, $S_4$ et $S_5$ émis par un séquenceur interne à l'unité du type représenté à la figure 6. Le déchargement a lieu au cours d'une phase de transfert START et est commandé par le signal START appliqué sur l'entrée 2 d'une porte 29 dont l'entrée 1 se trouve reliée à la sortie 5 du multiplexeur MUX28. Comme une instruction contient toujours une adresse, l'adresse contenue dans le registre RI est transférée sur le bus d'adresse BUSA au travers de la porte ET26 dont l'entrée 2 est reliée à la zone d'adresse du registre d'instruction, cette porte est commandée par un signal de cycle $S_1$ émis par le séquenceur interne à l'unité du type représenté à la figure 6 et le signal START.

Les phases START et REPONSE ont lieu au cours de l'exécution d'opérations élémentaires d'échange d'informations sur le BUS B. Une opération peut être définie comme un travail élémentaire que doit exécuter une unité, ce peut être par exemple une opération de lecture ou d'écriture de mémoire. Suivant sa nature, une opération peut s'exécuter en une ou deux phases séparées. Lorsqu'une opération demande deux phases la première est la phase »START« et la deuxième est la phase »REPONSE«. Ces phases sont déclenchées à l'aide des basculeurs correspondant de la figure 5.

L'intervalle de temps qui sépare une phase START d'une phase REPONSE d'une même opération pourra judicieusement être utilisée pour effectuer d'autres opérations. Naturellement une phase START ou une phase REPONSE nécessite pour son exécution un temps plus ou moins grand suivant la

nature de l'opération correspondante, ce temps est mesuré à partir du cycle élémentaire de l'horloge Ho du système. Les phases START et REPONSE vont donc s'exécuter en fonction du type d'opération effectué en un nombre de cyles d'horloge du système plus ou moins important. Cette exécution est donc synchronisée à l'aide des séquenceurs des figures 6 et 7. La figure 6 représente le séquenceur utilisé dans chaque unité pour exécuter une séquence START. Il se compose d'un compteur binaire 36 à 3 basculeurs. Ce compteur progresse au rythme du signal d'horloge Ho du système appliqué sur son entrée $C_K$. Sa progression est commandée par le signal START émis par le basculeur START. Les états de ce compteur sont transmis à l'entrée des portes ET 45 à 49 qui décodent de façon classique les cycles $S_1$ à $S_5$ de la phase START. Dans une phase START, l'unité émet des données à destination d'une autre unité. Cette émission peut avoir lieu sur un ou plusieurs mots. Pour une émission de un ou deux mots le basculeur B12 est positionné et active l'entrée 1 de la porte ET39. Pour une émission sur quatre mots, la bascule B4 est positionnée et active l'entrée 1 de la porte ET38. Les sorties 3 des portes 39 et 38 sont appliquées respectivement aux entrées 1 et 2 d'une porte OU37 dont la sortie 3 délivre le signal R5 de remise à zéro du compteur 36.

Les entrées 2 des portes 38 et 39 reçoivent respectivement les signaux S5 et S3 délivrés par les portes 47 et 49. Ainsi, une séquence START qui nécessite un transfert de 1 ou 2 mots se terminera à la fin du cycle $S_3$ alors que celle qui aura nécessité un transfert de 4 mots prendra fin à la fin du cycle $S_5$. La décision de la longueur du transfert est naturellement prise par l'organe de commande qui délivre les signaux CMD.

L'état des signaux CMD détermine la mise en position du basculeur B12 ou du basculeur B4, lorsque $CMD_3 = 1$ le basculeur B4 prend l'état 1 alors que lorsque CMD3 = 0 c'est le basculeur B12 qui prend l'état 1, cette commande a lieu pendant le cycle $S_2$ du séquenceur.

La figure 7 représente le séquenceur utilisé dans chaque unité pour exécuter une séquence REPONSE. Il se compose d'un compteur binaire 50 à 3 basculeurs. Ce compteur progresse au rythme du signal d'horloge $H_o$ appliqué sur son entrée $C_k$. La progression est commandée par le signal REPONSE émis par le basculeur REPONSE. Les états de ce compteur sont transmis à l'entrée des portes ET51 à 54 de façon à décoder les cycles $R_1$ à $R_4$. Dans une séquence REPONSE, l'unité reçoit des données provenant d'une autre unité. La réception peut porter sur un ou plusieurs mots suivant la longueur du transfert défini par le champ CMD. Ce champ CMD a été transmis par l'unité qui a initialisé la séquence START et a été mémorisé dans le registre BCMD62. L'unité qui exécute une séquence REPONSE, répond à l'unité demanderesse en lui retournant son numéro d'identification UNID, ce qui permet à l'unité demanderesse d'identifier le message REPONSE qui lui est transmis. Cette identification a lieu dans le comparateur 56 qui compare pendant le cycle $R_1$ le numéro UNID transmis par le répondeur au numéro i d'identification de l'unité. S'il y a identité entre les numéros, le message REPONSE concerne l'unité, le basculeur 55 est positionné à l'état 1, l'entrée des portes ET 58 et 59 ainsi que l'entrée 5 du registre de données RDL sont validées. Pour une réponse portant sur un mot, le compteur 50 est remis à zéro à la fin du cycle $R_1$ par la sortie de la porte OU57 dont l'entrée 1 est commandée par la sortie 4 de la porte ET59 dont les entrées sont commandées par le champ CMD le signal $R_1$ et la sortie Q du basculeur 55. Le mot DT transmis est alors mémorisé dans la zone 1 du registre RDL60. Pour une réponse portant sur quatre mots, les mots sont successivement mémorisés dans les zones 1 à 4 du registre RDL60 au rythme des cycles $R_1$ à $R_4$, au travers du multiplexeur 61. Le compteur 50 est remis à zéro à la fin du cycle $R_4$ par l'action de la porte 58 sur la porte OU57.

Le diagramme de la figure 8 illustre les opérations qu'une unité doit nécessairement effectuer pour élire une demande locale en fonction de sa spécialisation dans le système. Si la demande locale se produit au cours du cycle 1 d'une phase (étape 63) la demande locale sera éligible si elle satisfait aux conditions logiques représentées sur la figure 9 (Etape 64). Puis elle devra nécessairement satisfaire aux conditions logiques représentées à la figure 10. Dans les autres cycles, autres que le cycle 1, l'étape 64 n'est pas à effectuer, par contre l'étape 65 est toujours réalisée quel que soit le cycle d'une phase. Ensuite en fonction du type de demandeur l'une ou l'autre des étapes 67, 68 au 69 est exécutée. Si le demandeur est un contrôleur d'entrée-sortie, la demande doit satisfaire les conditions logiques montrées à la figure 11. Si le demandeur est un cache une différenciation est faite suivant le cas où ce cache est tenant ou non. S'il est tenant, la demande doit satisfaire les conditions logiques de la figure 12, par contre s'il n'est pas tenant il doit satisfaire celles de la figure 13.

On remarquera suivant le diagramme de la figure 8 qu'une demande locale d'une unité de mémorisation MMU est toujours éligible sans conditions. Les conditions logiques et leur cablage correspondant illustrés par les figures 9 à 13 ne sont donnés qu'à titre d'exemple et ne revêtent pas un caractère absolu, elles dépendent en fait de la structure physique des unités constituant le système de la figure 2.

Sur la figure 9, le circuit OU71 et la porte ET72 indiquent que les demandes locales, d'écriture en mémoire MMU (WM) de (SWAPPING) (SW) ou d'écriture dans des registres (WR) ne sont éligibles sans condition s'il s'agit d'une phase REPONSE. Les circuits 73 et 74 indiquent que les demandes locales d'Interruption (INT) de TRAP (TRAP), d'invalidation (INV), de lecture de mémoire (RM) de l'écriture et d'effacement (R/C) de test (T/S), de lecture de registre (R/R), de lecture sans comparaison ne sont éligibles s'il s'agit d'une phase START, que pendant le cycle 1 d'une REPONSE. Les circuits 75 et 76 indiquent que les demandes locales d'écriture en mémoire WM, d'écriture dans des registres WR

et de SWAPPING ne sont éligibles que pendant le cycle 1 d'une réponse d'écriture. Les circuits 77 et 78 indiquent que les demandes locales de lecture en mémoire (RM), de lecture et d'effacement (RC) de test (T/S) de lecture de registre (R/R) et de lecture dans comparaison (RWC) ne sont éligibles s'il s'agit d'une phase REPONSE que durant le cycle 1 d'une réponse d'écriture.

Les circuits de la figure 10 réalisent les conditions nécessaires pour rendre éligible les demandes locales en fonction de l'état des lignes de données. L'état des lignes de données est connu par la valeur du contenu du registre STATR. Ce registre est constitué de deux basculeurs. L'état de ce registre est lu pendant n'importe quel cycle, un état 00 au cycle n signifie que les lignes de données deviennent disponibles au cycle n + 1, l'état 01 les rend disponibles au cycle n + 2, l'état 10 les rend disponibles au cycle n + 3 et l'état 11 les rend disponibles au cycle n + 4. Le cablage des circuits de la figure 10 correspond à la table de vérité suivante:

| | Type de demande locale | STATR 0 : 2 |
|---|---|---|
| Réponse — | Ecriture mémoire (WM)<br>Swapping (SW)<br>Ecriture de registre (WR) | Indifférent |
| START | Interruption (INT)<br>TRAP (TRAP)<br>Invalidation (INV) | Indifférent<br>Indifférent<br>Indifférent |
| START | Lecture de mémoire (RM)<br>Lecture effacement (RC)<br>Test et Marquage (TS)<br>Lecture de registre (RR)<br>Lecture sans comparaison (RWC) | Indifférent<br>Indifférent<br>Indifférent<br>Indifférent<br>Indifférent |
| START | Ecriture mémoire<br>Ecriture registre<br>Swapping | 0 x |
| | cycle différent du cycle No 2 d'un START<br>cycle No 2 d' un START | Jamais éligible |
| RESP | Lecture mémoire (RM)<br>Lecture et effacement (RC)<br>Test et marquage T/S<br>Lecture de registre<br>Lecture sans comparaison | 00 |

La table de vérité suivante permet de rendre éligible les demandes locales d'un contrôleur d'entrée sortie (MTU).

Le circuit logique correspondant est montré à la figure 11.

| | Type de demande | STINR | CABYR |
|---|---|---|---|
| START | Interruption (INT) | 0 | 0 |
| START | Lecture de mémoire (RM)<br>Test et marquage (T/S)<br>Lecture de registre (RR)<br>Lecture sans comparaison (RWC) | 0 | 0 |
| START | Ecriture en mémoire (WM)<br>Ecriture en registre (WR) | 0 | 0 |

STINR = 1 interdit l'émission des signaux START.

La table de vérité suivante permet de rendre éligible les demandes locales émises par une unité de mémoire cache lorsqu'elle est tenante. Le circuit logique correspondant est représenté à la figure 12.

| | Type de demandes | STINR | CABYR |
|---|---|---|---|
| RESP | Ecriture Mémoire (WM)<br>Lecture Mémoire (RM)<br>Lecture et effacement (RC)<br>Test et marquage (T/S) | x | x |
| START | Interruption (INT)<br>TRAP (TRAP)<br>Invalidation (INV) | 0 | 0 |
| START | Lecture Mémoire (RM)<br>Lecture et effacement (RC)<br>Test et marquage (T/S)<br>Lecture de registre (RR)<br>Lecture sans comparaison (RWC) | 0 | 0 |
| START | Ecriture Mémoire (WM)<br>Ecriture de registre (WR)<br>Swapping (SW) | 0 | 0 |

La table de vérité suivante permet de rendre éligible les demandes locales émises par une unité de mémoire cache non tenante. Le circuit logique correspondant est représenté sur la figure 13.

| | Type de demandes | STINR | CABYR |
|---|---|---|---|
| RESP | Ecriture Mémoire (WM)<br>Lecture Mémoire (RM)<br>Lecture et effacement (RC)<br>Test et marquage (T/S) | 0 | x |
| START | Interruption (INT)<br>TRAP (TRAP)<br>Invalidation (INV) | 0 | 0 |
| START | Lecture Mémoire (RM)<br>Lecture et effacement (RC)<br>Test (T/S)<br>Lecture de registre (RR)<br>Lecture sans comparaison (RWC) | 0 | 0 |
| START | Ecriture Mémoire (WM)<br>Ecriture de registre (WR)<br>Swapping (SW) | 0 | 0 |

Le fonctionnement du dispositif selon l'invention est illustré par les diagrammes de temps des figures 14 à 17. Sur la figure 14, l'unité prioritaire effectue une écriture d'un mot de données dans une unité de mémoire MMU. Sa logique de commande démarre une phase START comprenant les cycles élémentaires $S_0$ à $S_3$. Durant le cycle $S_1$ l'adresse de la mémoire est envoyée par l'unité élue sur les lignes d'adresse du BUSA et le mot de commande CMD est également émis par l'organe de commande de l'unité pour signaler à l'unité de mémoire qu'une opération d'écriture est demandée.

Durant le cycle $S_2$, le champ CMD est de nouveau émis sur les lignes de commande du BUS B pour signaler à l'unité de mémoire qu'une opération d'écriture d'un mot est demandée et le mot de donnée DT est transmis par l'unité prioritaire vers l'unité de mémoire MMU.

La réponse de l'unité de mémoire MMU intervient lorsque celle-ci devient à son tour prioritaire. Elle

s'effectue selon la figure 14 en deux cycles $R_0$ et $R_1$. Durant le cycle $R_1$, le mot UNID d'identification de l'unité qui attend la réponse est émis sur les lignes de commandes et un code de contrôle d'erreur est envoyé afin de vérifier que l'écriture s'est effectuée dans de bonnes conditions.

La figure 15 représente un cycle d'écriture de deux mots dans une unité cache. Comme il s'agit d'une écriture de deux mots le signal STAT à la valeur 01 au cycle $S_1$ puis la valeur 00 au cycle $S_2$, le transfert des données a lieu pendant les cycles $S_2$ et $S_3$. La réponse a lieu comme précédemment.

La figure 16 correspond à une opération d'écriture dans une mémoire MMU de 4 mots. Dans ce cas, STAT a la valeur 11 du cycle $S_1$, 10 au cycle $S_2$, 01 au cycle $S_3$ et 00 au cycle $S_4$, le transfert des 4 mots a lieu pendant les cycles $S_2$ à $S_5$. La réponse a lieu comme précédemment.

La figure 17 représente un cycle de lecture d'une unité de mémoire MMU. La phase STAT est exécutée pour adresser la mémoire pendant le cycle $S_1$, et commander la lecture au cycle $S_1$ ainsi que la longueur du transfert pendant le cycle $S_2$. Dans l'exemple de la figure 17, il s'agit d'une lecture de 4 mots en mémoire. Ces 4 mots sont transférés vers l'unité demanderesse pendant l'exécution de la phase REPONSE de la mémoire MMU. Au cycle $R_1$, STAT est placé dans l'état 10 pour signaler que les lignes de données seront disponibles après le cycle R4.

**Revendications**

1. Dispositif de décentralisation de la gestion du bus de transfert des informations commun à plusieurs unités d'un système de traitement de l'information, les unités pouvant être constituées par des processeurs individuels ainsi que par des mémoires auxquelles chaque processeur est connectable, chaque unité possédant une logique de commande (12bis) ainsi que des moyens pour initialiser des phases de demande de service (START) vers d'autres unités ou de réponse (REPONSE) à des demandes de service demandées par d'autres unités, chaque logique de commande (12bis) étant munie d'un même circuit de priorité (12) recevant sur une entrée, la demande locale ($RQ_iL$) de l'unité elle-même, chaque logique de commande étant munie d'un circuit d'éligibilité (13) pour délivrer un signal de demande éligible ($RQ_iE$) résultant de la transformation par le circuit d'éligibilité (13) d'une demande locale ($RQ_iL$) en fonction de la spécialisation de l'unité dans laquelle elle se trouve et de l'état de disponibilité du dit bus de transfert des informations, caractérisé en ce que le circuit de priorité (12) reçoit en outre sur d'autres entrées

— l'ensemble des demandes externes (RQk) émises par les autres unités, la maîtrise du bus étant accordée à l'unité demanderesse dont le circuit de priorité la reconnaît comme étant la plus prioritaire
  —ainsi que la sortie d'éligibilité délivrant le signal de demande éligible ($RQ_iE$.)

2. Dispositif de décentralisation de la gestion du bus de transfert d'informations commun à plusieurs unités d'un système de traitement de l'information selon la revendication 1, caractérisé en ce que chaque logique de commande (12bis) comprend en plus un registre (14, STATR) associé au circuit d'éligibilité (13) pour générer à tout instant un signal représentant l'état de disponibilité du dit bus de transfert des informations.

3. Dispositif de décentralisation de la gestion du bus de transfert des informations commun à plusieurs unités d'un système de traitement de l'information selon les revendications 1 et 2, caractérisé en ce que le circuit d'éligibilité (13) comprend des premiers moyens (71 et 72) pour élire sans condition les demandes locales d'écriture en mémoire (WM), d'écriture dans des registres (WR) et d'échange (SW) lorsque ces demandes sont effectuées dans une phase de réponse (REPONSE) commandée par les dits moyens d'initialisation.

4. Dispositif de décentralisation de la gestion du bus de transfert des informations commun à plusieurs unités d'un système de traitement de l'information selon les revendications 1, 2 et 3, caractérisé en ce que le circuit d'éligibilité (13) comprend des deuxièmes moyens (73 et 74) commandés dans le premier cycle d'une phase de réponse pour élire les demandes locales d'interruption (INT), (TRAP), d'invalidation (INV), de lecture de mémoire (RM), de test (T/S) de lecture de registre (R/R) de lecture sans comparaison (RWC) lorsque ces demandes ont été demandées dans une phase START.

5. Dispositif de décentralisation de la gestion du bus de transfert des informations commun à plusieurs unités d'un système de traitement de l'information selon les revendications 1, 2, 3 et 4, caractérisé en ce que le circuit d'éligibilité (13) comprend des troisièmes moyens (75 et 76) commandés dans le premier cycle d'une phase de réponse d'écriture pour élire les demandes locales d'écriture en mémoire (WM), d'écriture dans des registres (WR) et d'échange (SW).

6. Dispositif de décentralisation de la gestion du bus de transfert des informations commun à plusieurs unités d'un système de traitement de l'information selon les revendications 1, 2, 3, 4 et 5, caractérisé en ce que le circuit d'éligibilité (13) comprend des quatrièmes moyens commandés dans le premier cycle d'une phase de réponse pour élire les demandes locales de lecture en mémoire (RM), de lecture et d'effacement (RC) de test (T/S), de lecture de registre (RR), et de lecture sans comparaison (RWC).

7. Dispositif de décentralisation de la gestion du bus de transfert des informations commun à plusieurs unités d'un système de traitement de l'information selon les revendications 1, 2, 3, 4, 5 et 6, caractérisé en ce que le circuit d'éligibilité (TR13) comprend des cinquièmes moyens pour rendre éligible une demande locale en fonction de l'état de registre (14, STATR) signalant le numéro de cycle d'une phase »réponse« ou »start« durant lequel le dit bus de transfert des informations devient disponible.

8. Dispositif de décentralisation de la gestion du bus de transfert des informations commun à plusieurs unités d'un système de traitement de l'information selon la revendication 7, caractérisé en ce que les cinquièmes moyens comprennent des premiers circuits (80, 81, 84, 85) pour rendre éligible les demandes d'écriture en mémoire (WM), d'échange (SW) ou d'écriture de registres (WR) dans une phase de réponse et pour rendre éligible les demandes d'interruption (INT), (TRAP) d'invalidation (INV), de lecture de mémoire (RM), de lecture d'effacement (RC) de test et marquage (T/S), de lecture de registre (R/R), de lecture sans comparaison (RWC) dans une phase START, l'éligibilité dans ces cas ayant toujours lieu quel que soit l'état du registre (14) signalant à tout instant l'état de disponibilité du dit bus de transfert des informations.

9. Dispositif de décentralisation de la gestion du bus de transfert des informations commun à plusieurs unités d'un système de traitement de l'information selon les revendications 7 et 8, caractérisé en ce que les dits cinquièmes moyens comprennent des deuxièmes circuits (82, 86, 87) sensibles à un premier état particulier du registre (14) pour rendre éligible des demandes d'écriture de mémoire (WM), d'écriture de registre ou d'échange (SW) seulement dans des cycles différents du deuxième cycle d'une phase START ainsi que des troisièmes circuits (83, 88) sensibles à un deuxième état particulier du registre 14 pour rendre éligible les demandes de lecture en mémoire RM, de lecture et d'effacement (RC) de test (T/S), de lecture de registre (RR), de lecture sans comparaison (RWC) seulement dans le cycle d'une phase de réponse que suit celui dans lequel la demande est apparue.

10. Dispositif de décentralisation de la gestion du bus de transfert des informations commun à plusieurs unités d'un système de traitement de l'information selon l'une quelconque des revendications précédentes caractérisé en ce que le circuit d'éligibilité (13) est constitué de sixième moyens spécifiques de l'unité demanderesse dans laquelle le circuit d'éligibilité est situé, autorisant l'éligibilité de demandes d'interruption (INT), de lecture de mémoire (RM), de test et de marquage (T/S), de lecture de registre (RR), de lecture sans comparaison (RWC), d'écriture de mémoire (WM) et d'écriture de registre lorsque celles-ci sont faites par un contrôleur de mémoire de masse (MTU) durant une phase START et autorisant l'éligibilité de demandes effectuées par une mémoire cache dans une phase START lorsque celle-ci concerne une interruption (INT), (TRAP), une invalidation (INV), une lecture de mémoire (RM) une lecture avec effacement (RC), un test (T/S), une lecture de registre (RR), une lecture sans comparaison (RWC), une écriture de mémoire (WM), une écriture de registre (WR) ou un échange (SW) ou dans une phase REPONSE lorsque celle-ci concerne une écriture de mémoire (WM), une lecture de mémoire (RM), une lecture avec effacement (RC) ou un test (T/S), et une mémoire cache non tenante.

**Patentansprüche**

1. Vorrichtung zum Dezentralisieren der Verwaltung der mehreren Einheiten eines Informationsverarbeitungssystems gemeinsamen Busleitung für die Informationsüberführung, wobei die Einheiten durch einzelne Prozessoren sowie durch Speicher gebildet sein können, mit denen jeder Prozessor verbindbar ist, wobei jede Einheit eine Steuerlogik (12 bis) sowie Mittel zum Initiieren von an andere Einheiten gerichteten Dienstanforderungs-Phasen (START) oder von Antwort-Phasen (REPONSE) zur Beantwortung von Dienstanforderungen, die von anderen Einheiten abgegeben werden, umfaßt, wobei jede Steuerlogik (12 bis) mit der gleichen Prioritätsschaltung (12) versehen ist, die an einem Eingang die lokale Anforderung ($RQ_iL$) der Einheit selbst empfängt, und wobei jede Steuerlogik mit einer Wählbarkeit-Schaltung (13) versehen ist, um ein Wählbare-Anforderung-Signal ($RQ_iE$) abzugeben, das aus der durch die Wählbarkeit-Schaltung (13) durchgeführten Umsetzung einer lokalen Anforderung ($RQ_iL$) in Abhängigkeit von der Spezialisierung der Einheit, in der sie sich befindet, und aus dem Verfügbarkeitszustand der Busleitung für die Informationsüberführung resultiert, dadurch gekennzeichnet, daß die Prioritätsschaltung (12) ferner an weiteren Eingängen empfängt:

— die Gesamtheit der externen Anforderungen (RQk), die durch die anderen Einheiten ausgegeben werden, wobei derjenigen anfordernden Einheit die Herrschaft über die Busleitung erteilt wird, deren Prioritätsschaltung sie als diejenige mit der höchsten Priorität erkennt;
— das von dem Wählbarkeit-Ausgang abgegebene wählbare -Anforderung-Signal ($RQ_iE$).

2. Vorrichtung zum Dezentralisieren der Verwaltung der mehreren Einheiten eines Informationsverarbeitungssystems gemeinsamen Busleitung für die Informationsüberführung, nach Anspruch 1, dadurch gekennzeichnet, daß jede Steuerlogik (12 bis) ferner ein Register (14, STATR) umfaßt, das der Wählbarkeit-Schaltung (13) zugeordnet ist, um zu jedem Zeitpunkt ein Signal zu erzeugen, welches

den Verfügbarkeitszustand der Busleitung für die Informationsüberführung darstellt.

3. Vorrichtung zum Dezentralisieren der Verwaltung der mehreren Einheiten eines Informationsverarbeitungssystems gemeinsamen Busleitung für die Informationsüberführung, nach den Ansprüchen 1 und 2, dadurch gekennzeichnet, daß die Wählbarkeit-Schaltung (13) erste Mittel (71 und 72) zum bedingungslosen Auswählen der lokalen Speichereinschreib-Anforderungen (WM), Registereinschreib-Anforderungen (WR) und Austausch-Anforderungen (SW), wenn diese Anforderungen in einer Antwortphase (REPONSE) erfolgen, die durch die Initiierungsmittel gesteuert wird, umfaßt.

4. Vorrichtung zum Dezentralisieren der Verwaltung der mehreren Einheiten eines Informationsverarbeitungssystems gemeinsamen Busleitung für die Informationsüberführung, nach den Ansprüchen 1, 2 und 3, dadurch gekennzeichnet, daß die Wählbarkeit-Schaltung (13) zweite Mittel (73 und 74) umfaßt, die in dem ersten Zyklus einer Anwortphase gesteuert werden, um die lokalen Unterbrechungs- (INT), (TRAP), Aufhebungs- (INV), Speicherlese- (RM), Test- (T/S), Registerlese- (R/R) und Lesen-ohne-Vergleich- (RWC) Anforderungen auszuwählen, wenn diese Anforderungen in einer START-Phase ausgegeben wurden.

5. Vorrichtung zum Dezentralisieren der Verwaltung der mehreren Einheiten eines Informationsverarbeitungssystems gemeinsamen Busleitung für die Informationsüberführung, nach den Ansprüchen 1, 2, 3 und 4, dadurch gekennzeichnet, daß die Wählbarkeit-Schaltung (13) dritte Mittel (75 und 76) umfaßt, die in dem ersten Zyklus einer Schreibantwortphase gesteuert werden, um die lokalen Speichereinschreib-(WM), Registereinschreib-(WR) und Austausch-(SW) Anforderungen auszuwählen.

6. Vorrichtung zum Dezentralisieren der Verwaltung der mehreren Einheiten eines Informationsverarbeitungssystems gemeinsamen Busleitung für die Informationsüberführung, nach den Ansprüchen 1, 2, 3, 4 und 5, dadurch gekennzeichnet, daß die Wählbarkeit-Schaltung (13) vierte Mittel umfaßt, die in dem ersten Zyklus einer Antwortphase gesteuert werden, um die lokalen Speichereinschreib-(RM), Lese- und Lösch (RC), Test- (T/S), Registerauslese-(RR) und Lesen-ohne-Vergleich- (RWC) Anforderungen auszuwählen.

7. Vorrichtung zum Dezentralisieren der Verwaltung der mehreren Einheiten eines Informationsverarbeitungssystems gemeinsamen Busleitung für die Informationsüberführung, nach den Ansprüchen 1, 2, 3, 4, 5 und 6, dadurch gekennzeichnet, daß die Wählbarkeit-Schaltung (TR13) fünfte Mittel umfaßt, um eine lokale Anforderung wählbar zu machen in Abhängigkeit von dem Zustand des Registers (14, START), welches die Zyklusnummer einer »Antwort«- oder »Start«-Phase signalisiert, während welcher die Busleitung für die Informationsüberführung verfügbar wird.

8. Vorrichtung zum Dezentralisieren der Verwaltung der mehreren Einheiten eines Informationsverarbeitungssystems gemeinsamen Busleitung für die Informationsüberführung, nach Anspruch 7, dadurch gekennzeichnet, daß die fünften Mittel erste Schaltungen (80, 81, 84, 85) umfassen, um die Speichereinschreib- (WM), Austausch- (SW) oder Registereinschreib- (WR) Anforderungen in einer Antwortphase wählbar zu machen und um die Unterbrechungs- (INT), (TRAP), Aufhebungs- (INV), Speicherlese- (RM), Lese-Lösch- (RC), Test-Markierung- (T/S), Registerlese- (R/R) und Lesen-ohne-Vergleich- (RWC) Anforderungen in einer START-Phase wählbar zu machen, wobei die Wählbarkeit in diesem Fall stets unabhängig vom Zustand des Registers (14) gegeben ist, welches zu jedem Zeitpunkt den Verfügbarkeitszustand der Busleitung für die Informationsüberführung signalisiert.

9. Vorrichtung zum Dezentralisieren der Verwaltung der mehreren Einheiten eines Informationsverarbeitungssystems gemeinsamen Busleitung für die Informationsüberführung, nach den Ansprüchen 7 und 8, dadurch gekennzeichnet, daß die fünften Mittel zweite Schaltungen (82, 86, 87) umfassen, die auf einen ersten besonderen Zustand des Registers (14) ansprechen, um Speichereinschreib- (MW), Registereinschreib- oder Austausch- (SW) Anforderungen nur in verschiedenen Zyklen des zweiten Zyklus einer START-Phase wählbar zu machen, sowie dritte Schaltungen (83, 88) umfassen, die auf einen zweiten besonderen Zustand des Registers (14) ansprechen, um die Speichereinschreib- (RM), Lese- und Lösch- (RC), Test- (T/S), Registerlese- (RR), Lesen-ohne-Vergleich- (RWC) Anforderungen nur in dem Zyklus einer Antwortphase wählbar zu machen, welche auf denjenigen folgt, in welchem die Anforderung aufgetreten ist.

10. Vorrichtung zum Dezentralisieren der Verwaltung der mehreren Einheiten eines Informationsverarbeitungssystems gemeinsamen Busleitung für die Informationsüberführung, nach einem der vorstehenden Ansprüche, dadurch gekennzeichnet, daß die Wählbarkeit-Schaltung (13) gebildet ist aus sechsten Mitteln, die spezifisch für die anfordernde Einheit sind, in welcher sich die Wählbarkeit-Schaltung befindet, und die die Wählbarkeit von Unterbrechungs- (INT), Speicherlese- (RM), Test- und -Markierung- (T/S), Registerlese- (RR), Lesen-ohne-Vergleich- (RWC), Speichereinschreib- (WM) und Registereinschreib-Anforderungen freigeben, wenn diese durch eine Massenspeichersteuerung (MTU) während einer START-Phase ausgegeben werden, und die Wählbarkeit von durch einen Maskenspeicher einer START-Phase ausgegebenen Anforderungen freigibt, wenn diese eine Unterbrechung (INT), (TRAP), eine Aufhebung (INV), das Speicherauslesen (RM), das Auslesen mit Löschen (RC), einen Test (T/S), ein Registerauslesen (RR), ein Lesen ohne Vergleich (RWC), das Speichereinschreiben (WM), das Registereinschreiben (WR) oder einen Austausch (SW) betreffen, oder in einer ANTWORT-Phase ausgegeben werden, wenn diese das Speichereinschreiben (WM), das Speicherauslesen (RM), das Lesen mit Löschung (RC) oder einen Test (T/S) und einen nicht haltenden Maskenspeicher betreffen.

## Claims

1. Device for decentralisation of the management of the data transfer bus common to several units of a data processing system, the units being able to consist of individual processors as well as of memories to which each processor may be connected, each unit having a control logic (12b) as well as means for initialising phases of calls for service (START) to other units or of response (RESPONSE) to calls for service requested by other units, each control logic (12b) being provided with one and the same priority circuit (12) which at one input receives the local call ($RQ_iL$) from the unit itself, each control logic being provided with an eligibility circuit (13) for delivery of an eligible call signal ($RQ_iE$) resulting from the conversion by the eligibility circuit (13) of a local call ($RQ_iL$) as a function of the specialisation of the unit in wich it is found and of the state of availability of the said data transfer bus, characterised in that the priority circuit (12) furthermore receives at other inputs

— the whole of the external calls (RQk) transmitted by the other units, the control of the bus being conferred upon the calling unit whose priority circuit recognises the same as having the highest priority,
— as well as the eligibility output supplying the eligible call signal ($RQ_iE$).

2. Device for decentralisation of the management of the data transfer bus common to several units of a data processing system according to claim 1, characterised in that each control logic (12b) moreover comprises a register (14, STATR) associated with the eligibility circuit (13) in order to generate at any instant a signal representing the state of availability of the said data transfer bus.

3. Device for decentralisation of the management of the data transfer bus common to several units of a data processing system according to claims 1 and 2, characterised in that the eligibility circuit (13) comprises first means (71 and 72) for selection unconditionally of the local calls for writing in a memory (WM), writing in registers (WR) and for exchange (SW) when these calls are made during a response phase (RESPONSE) controlled by the said initialisation means.

4. Device for decentralisation of the management of the data transfer bus common to several units of a data processing system according to claims 1, 2 and 3, characterised in that the eligibility circuit (13) comprises second means (73 and 74) controlled during the first cycle of a response phase for selection of the local calls for interruption (INT), (TRAP), for invalidation (INV), for memory reading (RM), for testing (T/S), for register reading (R/R), for reading without comparison (RWC) when these calls had been requested during a START phase.

5. Device for decentralisation of the management of the data transfer bus common to several units of a data processing system according to claims 1, 2, 3 and 4, characterised in that the eligibility circuit (13) comprises third means (75 and 76) operated during the first cycle of a write response phase for selection of the local calls for writing in a memory (WM), for writing in registers (WR) and for exchange (SW).

6. Device for decentralisation of the management of the data transfer bus common to several units of a data processing system according to claims 1, 2, 3, 4 and 5, characterised in that the eligibility circuit (13) comprises fourth means operated during the first cycle of a response phase for selection of the local read memory (RM), read and erase (RC), test (T/S), read register (RR) and read without comparision (RWC) calls.

7. Device for decentralisation of the management of the data transfer bus common to several units of a data processing system according to claims 1, 2, 3, 4, 5 and 6, characterised in that the eligibility circuit (TR13) comprises fifth means of rendering a local call eligible as a function of the state of the register (14, STATR) indicating the cycle number of a »response« or »start« phase during which the said data transfer bus becomes available.

8. Device for decentralisation of the management of the data transfer bus common to several units of a data processing system according to claim 7, characterised in that the fifth means comprise first circuits (80, 81, 84, 85) for rendering eligible the write memory (WM), exchange (SW) or write registers (WR) calls during a response phase and for rendering eligible the interruption (INT), (TRAP) invalidation (INV), read memory (RM), cancel read (RC), test and marking (T/S), read register (R/R), and read without comparision (RWC) calls during a START phase, the eligibility always occurring in these cases notwithstanding the state of the register (14) indicating the state of availability of the said data transfer bus at any instant.

9. Device for decentralisation of the management of the data transfer bus common to several units of a data processing system according to claims 7 and 8, characterised in that the said fifth means comprise second circuits (82, 86, 87) sensing a first particular state of the register (14) for rendering eligible write memory (WM), write register or substitution (SW) calls only during cycles other than the second cycle of a START phase as well as third circuits (83, 88) sensing a second particular state of the register (14) for rendering eligible the read memory (RM), read and cancel (RC), test (T/S), read register (RR), and read without comparison (RWC) calls only during the cycle of a response phase which follows that in which the call had appeared.

10. Device for decentralisation of the management of the data transfer bus common to several units

of a data processing system according to any one of the preceding claims, characterised in that the eligibility circuit (13) comprises sixth means specific to the calling unit in which the eligibility circuit is situated, authorising the eligibility of the interruption (INT), read memory (RM), test and mark (T/S), read register (RR), read without comparison (RWC), write memory (WM) and write register calls if these are made by a mass memory controller (MTU) during a START phase and authorising the eligibility of calls made by a cache memory during a START phase if the same relates to interruption (INT), (TRAP), invalidation (INV), read memory (RM), read with cancellation (RC), test (T/S), read register (RR), read without comparison (RWC), write memory (WM), write register (WR) or exchange (SW) or during a RESPONSE phase if the same relates to write memory (WM), read memory (RM), read and cancel (RC) or a test (T/S), and a non-retentive cache memory.

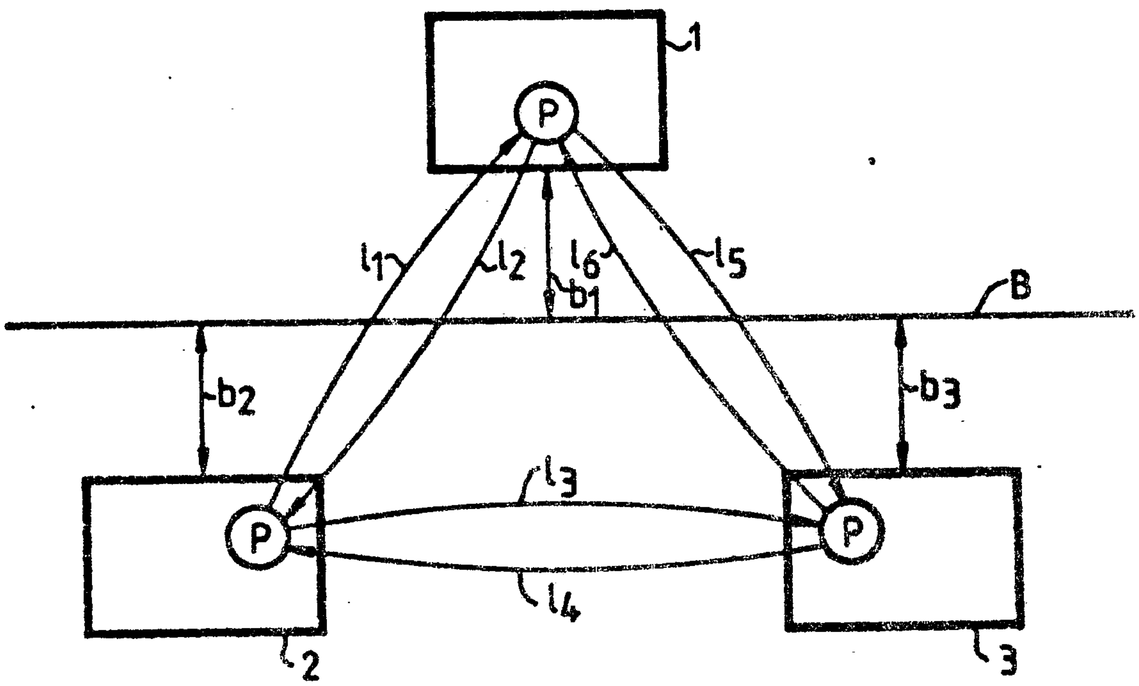


FIG.1

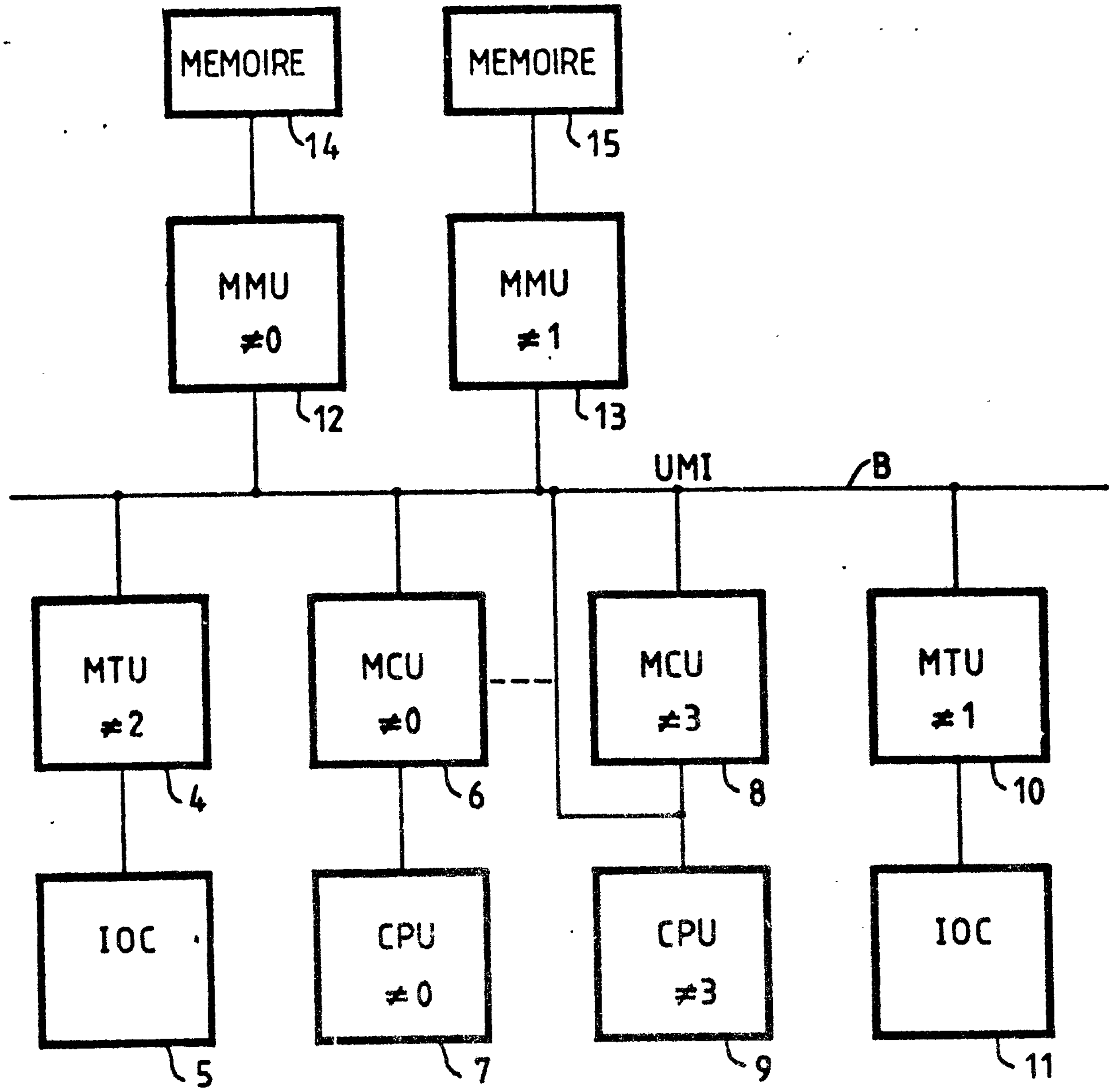
MEMOIRE
MEMOIRE
14
15
MMU
≠0
MMU
≠1
12
13
UMI
B
MTU
≠2
MCU
≠0
MCU
≠3
MTU
≠1
4
6
8
10
IOC
CPU
≠0
CPU
≠3
IOC
5
7
9
11

FIG. 2

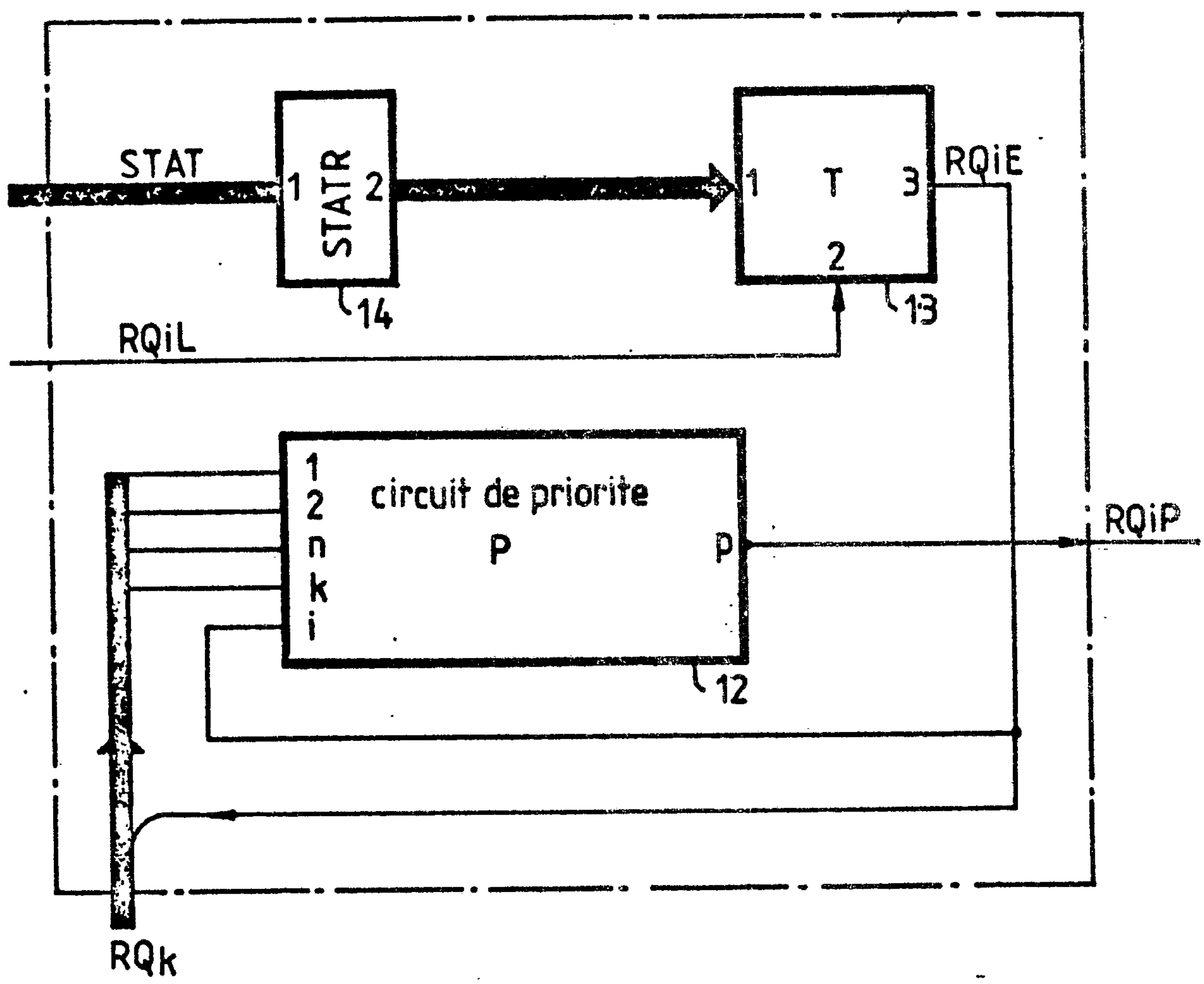
STAT
1
STATR
2
1
T
3
RQiE
2
14
13
RQiL
1
2
n
k
i
circuit de priorite
P
P
RQiP
12
RQk

FIG.3

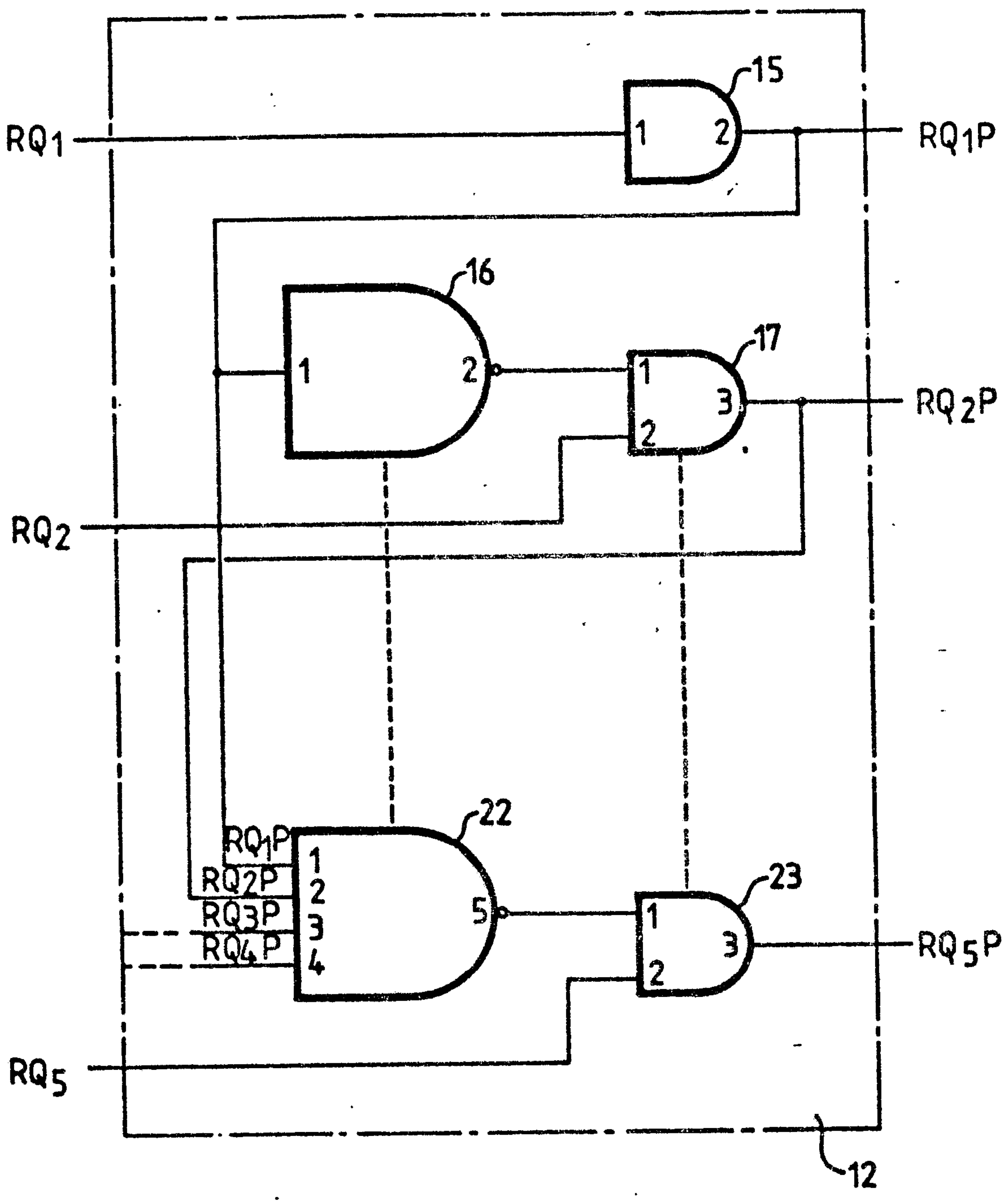

15
RQ1
1
2
RQ1P
16
1
2
17
1
3
2
RQ2P
RQ2
22
RQ1P
1
RQ2P
2
RQ3P
3
RQ4P
4
5
23
1
3
2
RQ5P
RQ5
12


FIG.4

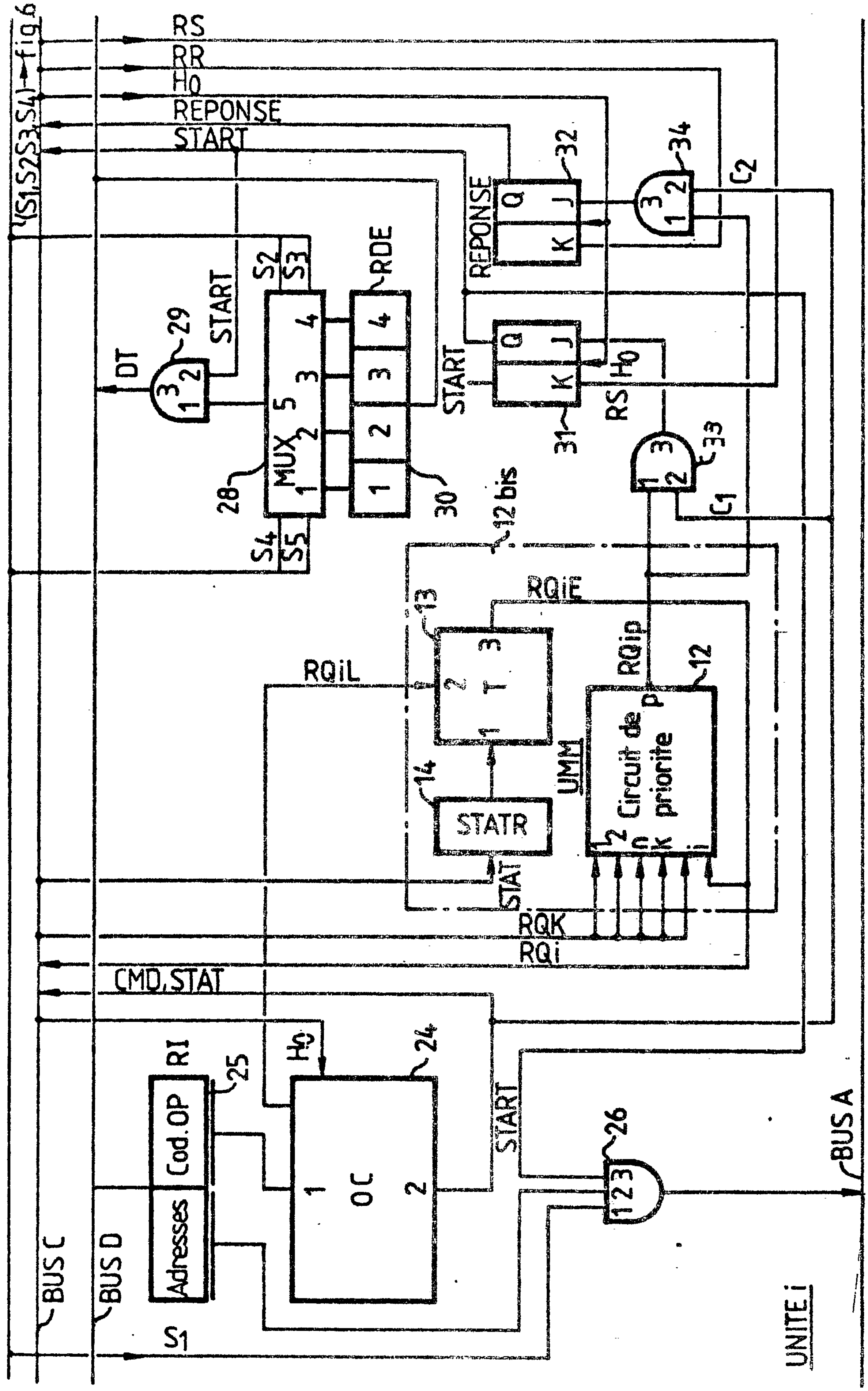
RS
RR
H0
REPONSE
START
(S1,S2,S3,S4) → fig.6
BUS C
BUS D
BUS A
S1
CMD, STAT
RQK
RQi
RQiL
RQiE
RQip
STAT
STATR
T
Circuit de priorite
UMM
MUX
DT
RDE
C1
C2
OC
Cod. OP
Adresses
RI
UNITE i
12 bis

FIG.5

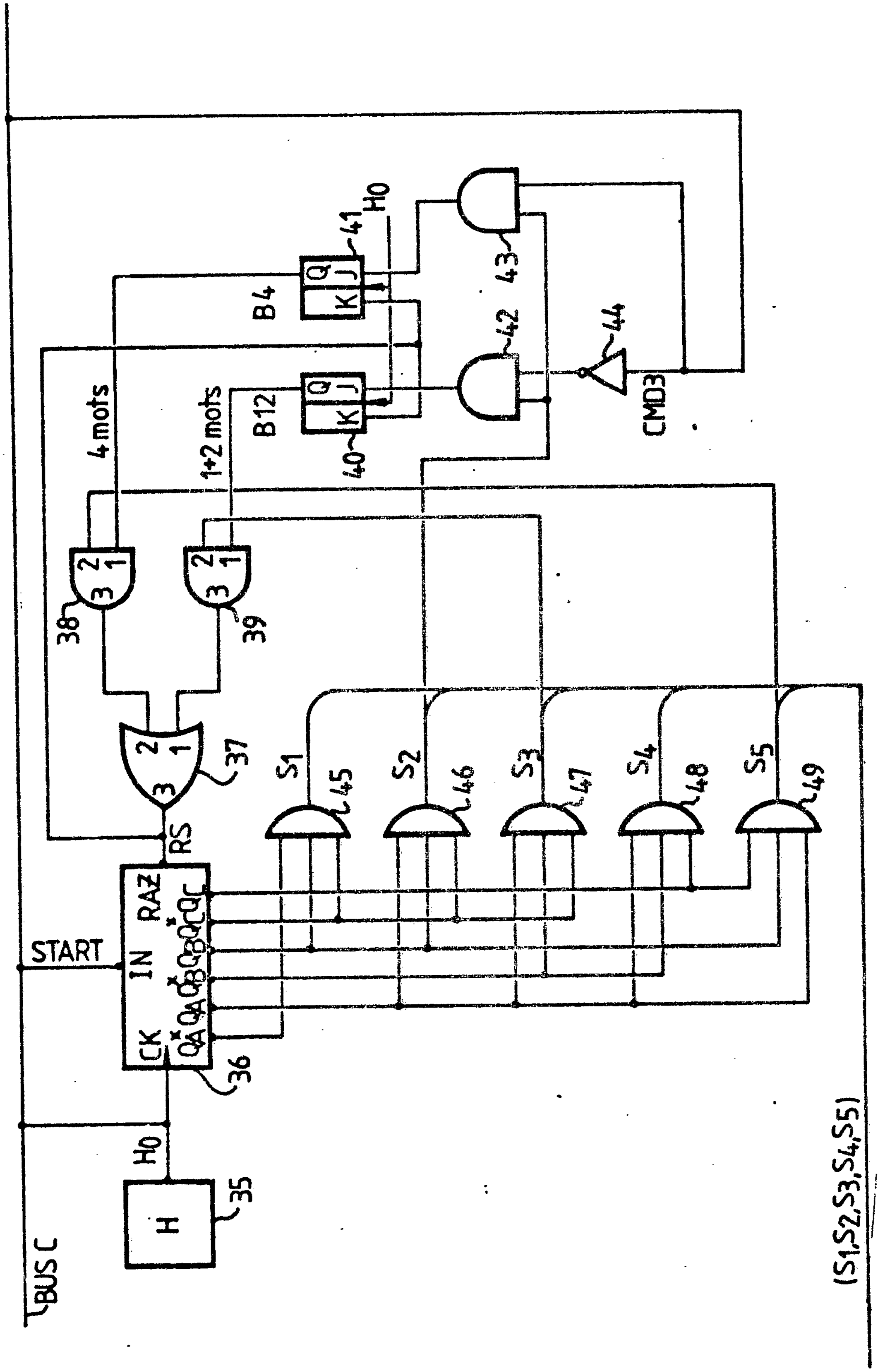
BUS C
H
35
H0
START
CK
IN
RAZ
RS
36
37
38
39
4 mots
1+2 mots
B12
B4
40
41
H0
42
43
44
CMD3
S1
S2
S3
S4
S5
45
46
47
48
49
(S1,S2,S3,S4,S5)

FIG.6

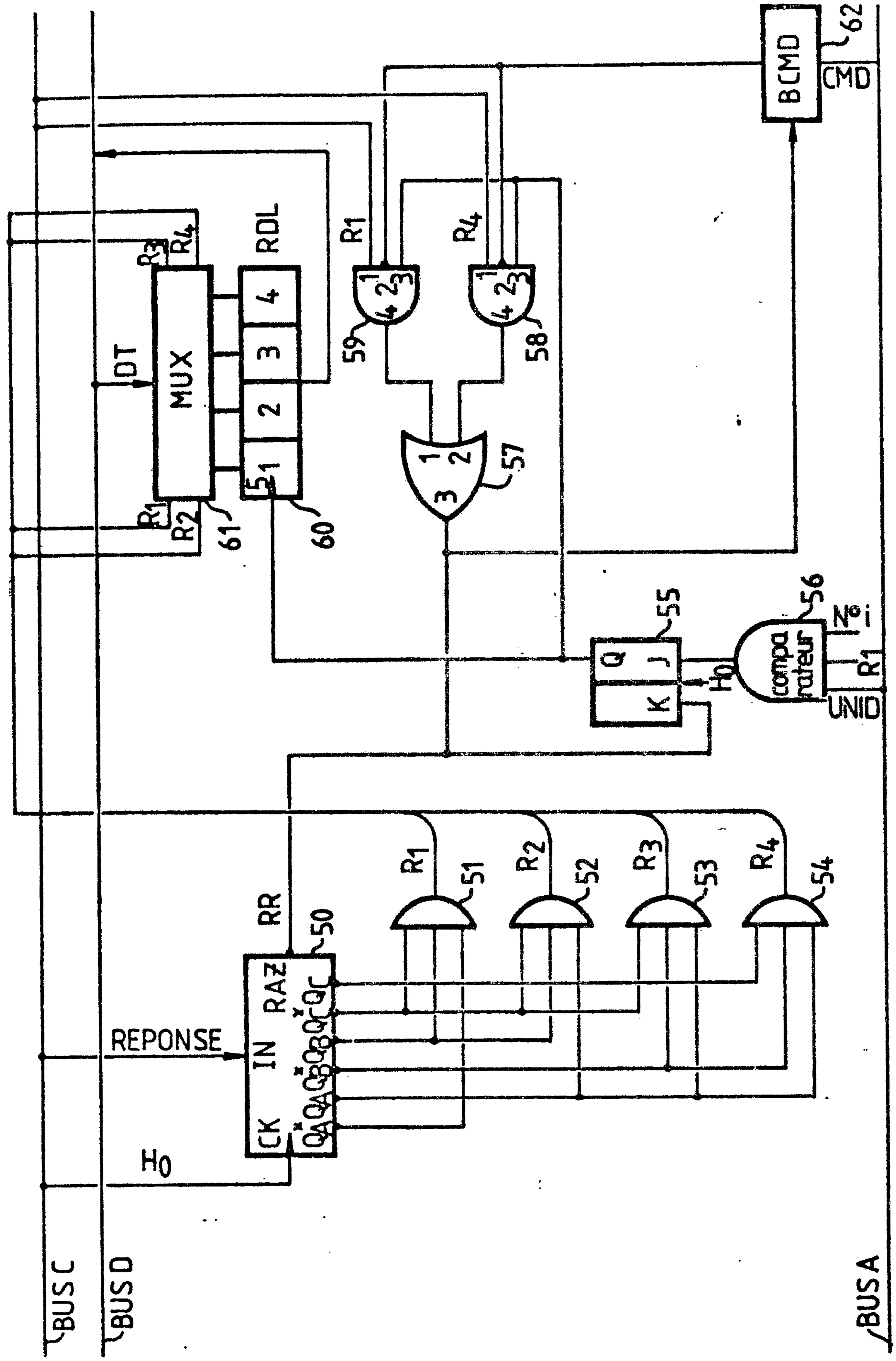

BUS C
BUS D
BUS A
REPONSE
H0
CK
IN
RAZ
RR
50
R1
R2
R3
R4
51
52
53
54
MUX
DT
RDL
1
2
3
4
60
61
59
58
57
Q
J
K
55
compa rateur
56
N°i
UNID
BCMD
CMD
62


FIG.7

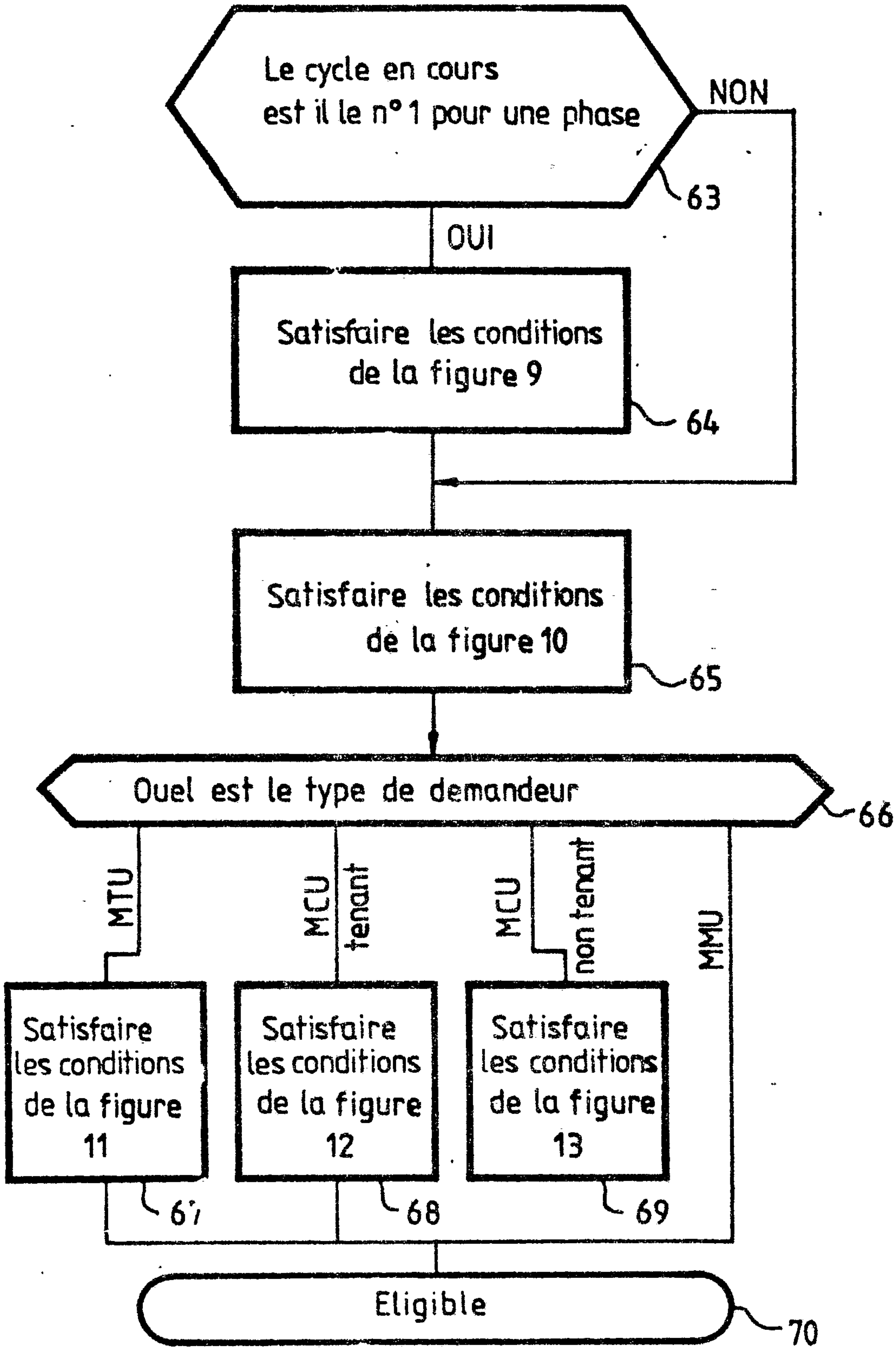
Le cycle en cours
est il le n° 1 pour une phase
NON
63
OUI
Satisfaire les conditions
de la figure 9
64
Satisfaire les conditions
de la figure 10
65
Ouel est le type de demandeur
66
MTU
MCU tenant
MCU non tenant
MMU
Satisfaire les conditions de la figure 11
Satisfaire les conditions de la figure 12
Satisfaire les conditions de la figure 13
67
68
69
Eligible
70

FIG.8

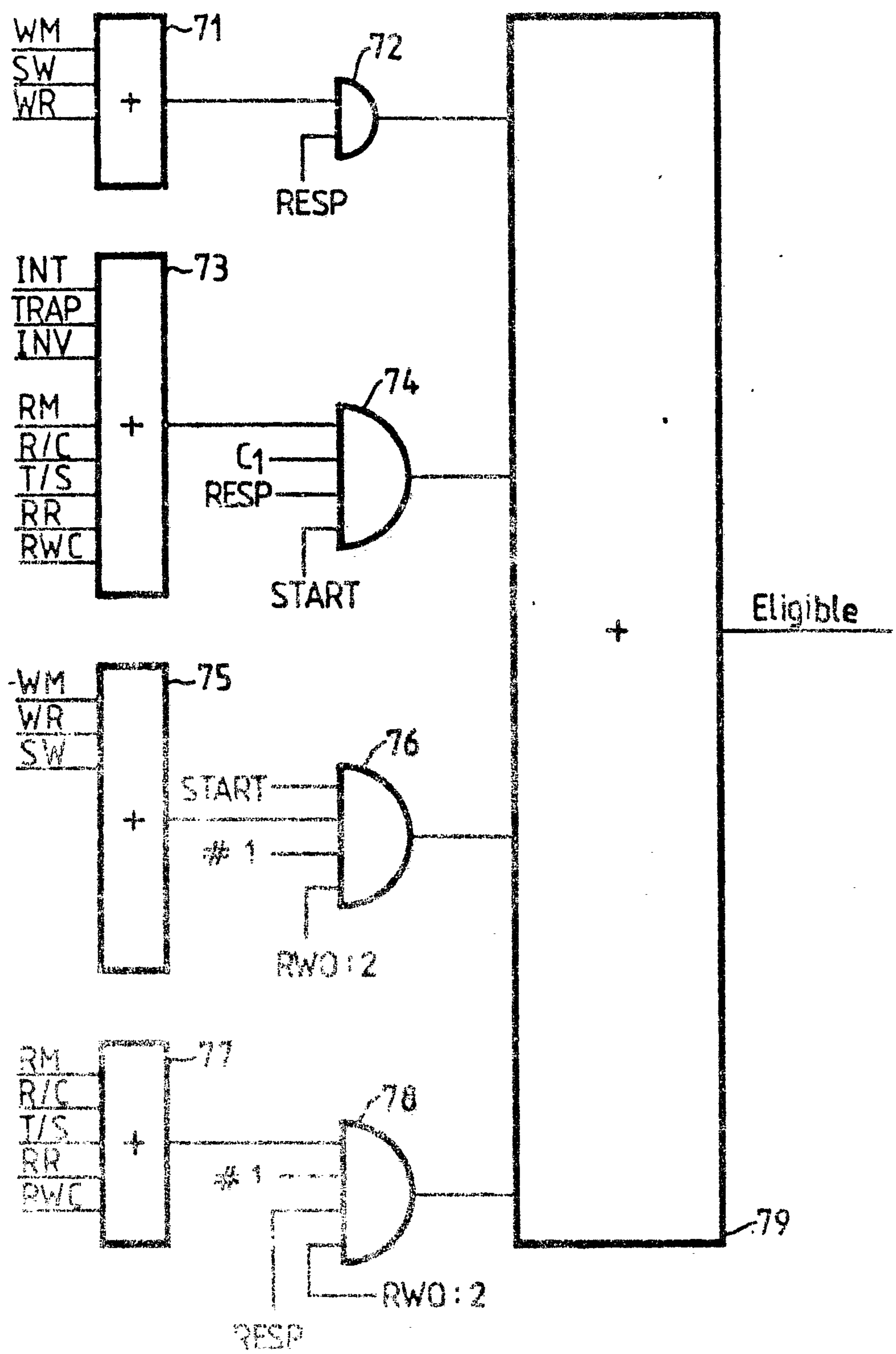
WM
SW
WR
71
72
RESP
INT
TRAP
INV
RM
R/C
T/S
RR
RWC
73
74
C1
RESP
START
Eligible
WM
WR
SW
75
76
START
# 1
RWO:2
RM
R/C
T/S
RR
RWC
77
78
# 1
RWO:2
RESP
79

FIG. 9

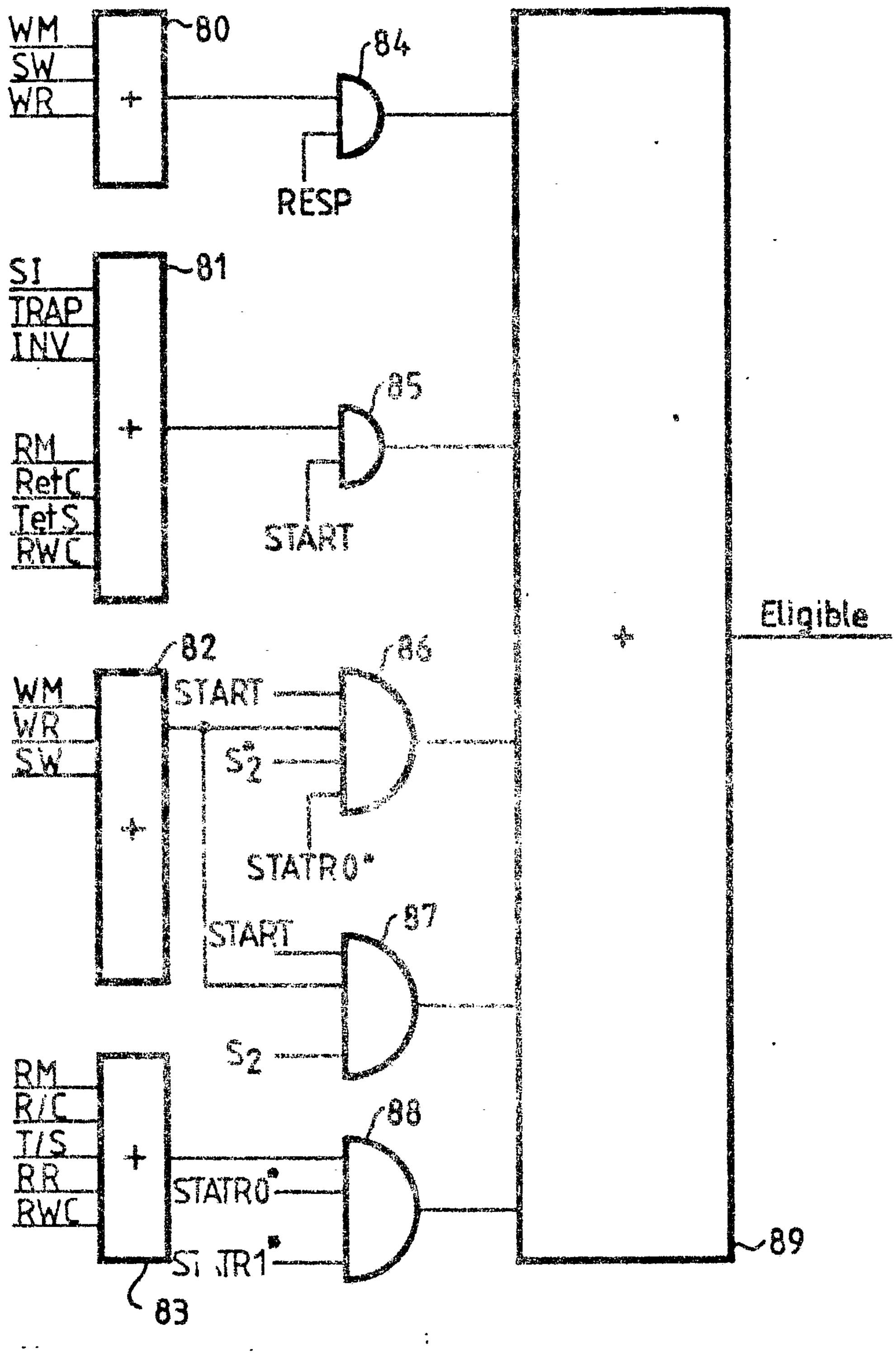
WM
SW
WR
80
+
84
RESP
SI
TRAP
INV
RM
RetC
TetS
RWC
81
+
85
START
82
WM
WR
SW
+
START
S2*
STATR0*
86
START
87
S2
RM
R/C
T/S
RR
RWC
+
STATR0*
STATR1*
83
88
+
89
Eligible

FIG.10

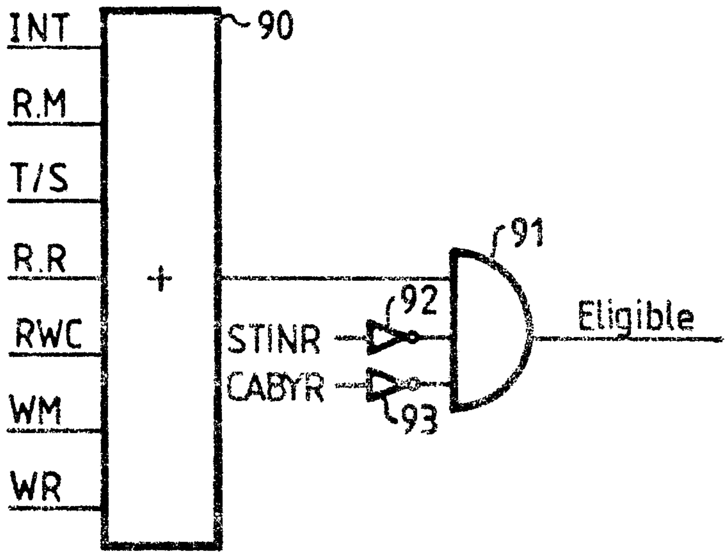
INT
R.M
T/S
R.R
RWC
WM
WR
+
90
91
92
93
STINR
CABYR
Eligible

FIG.11

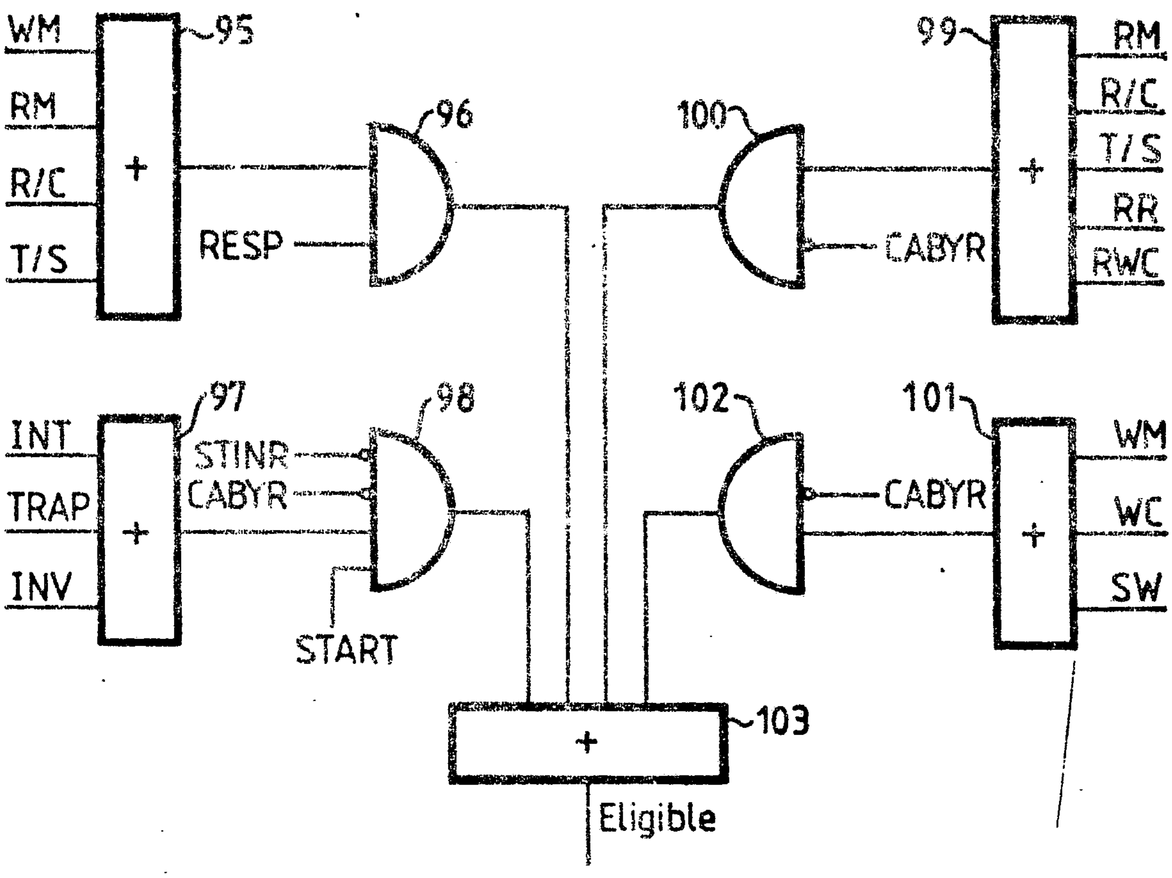
WM
RM
R/C
T/S
95
+
96
RESP
INT
TRAP
INV
97
STINR
CABYR
98
START
99
RM
R/C
T/S
RR
RWC
100
CABYR
102
101
CABYR
WM
WC
SW
103
Eligible

FIG 12

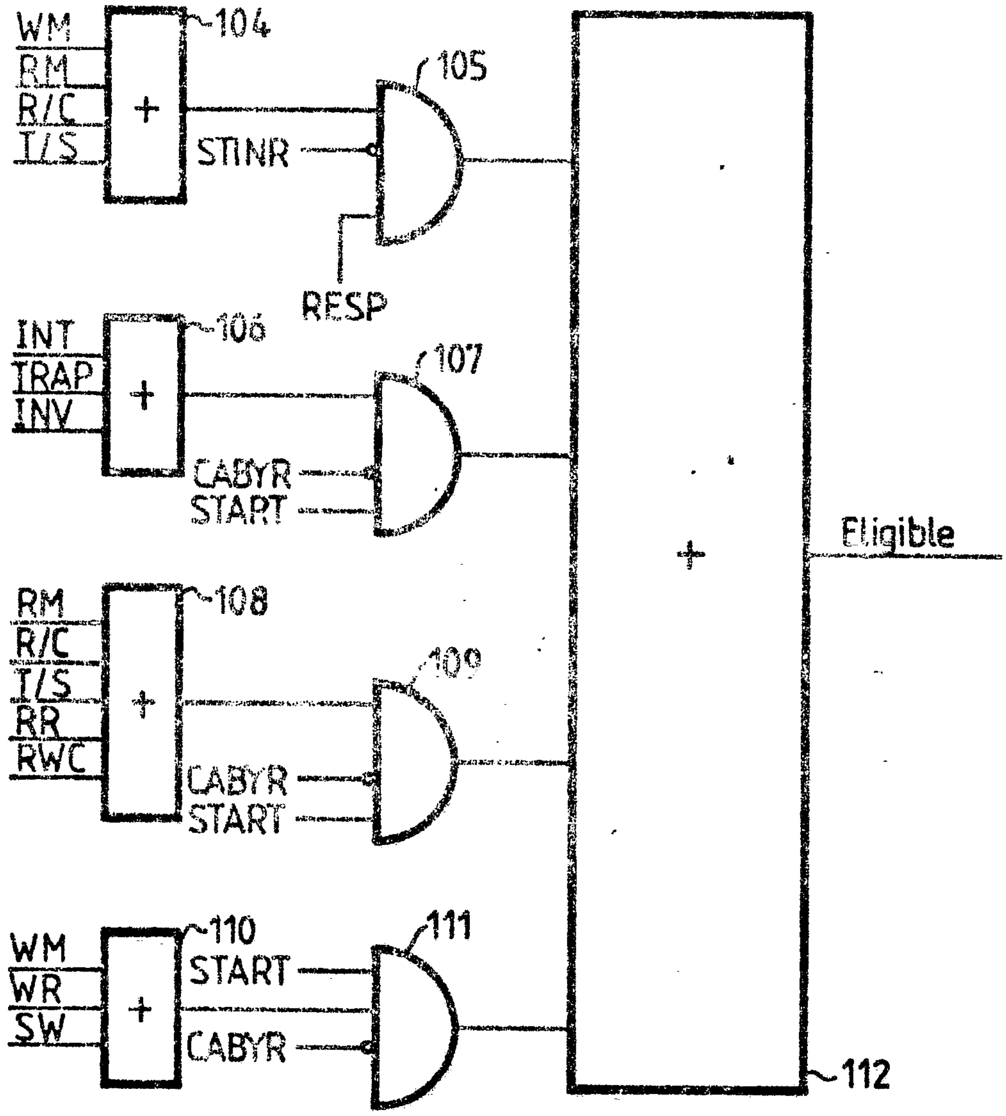
WM
RM
R/C
T/S
104
105
STINR
RESP
INT
TRAP
INV
106
107
CABYR
START
RM
R/C
T/S
RR
RWC
108
109
CABYR
START
WM
WR
SW
110
111
START
CABYR
Eligible
112

FIG.13

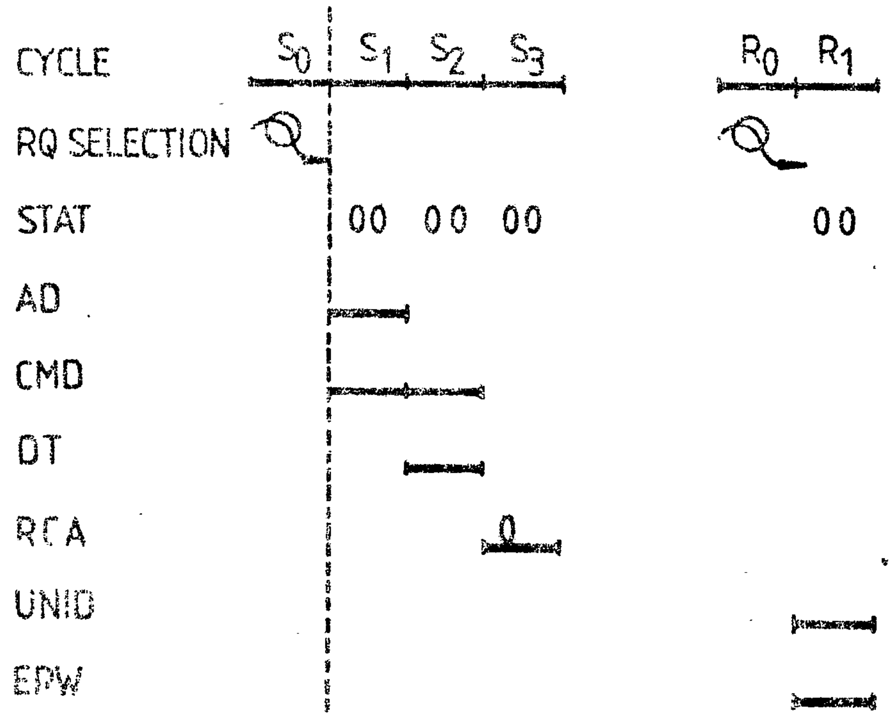
CYCLE
$S_0$ $S_1$ $S_2$ $S_3$
$R_0$ $R_1$
RQ SELECTION
STAT
00 00 00
00
AD
CMD
DT
RCA
0
UNID
ERW

FIG.14

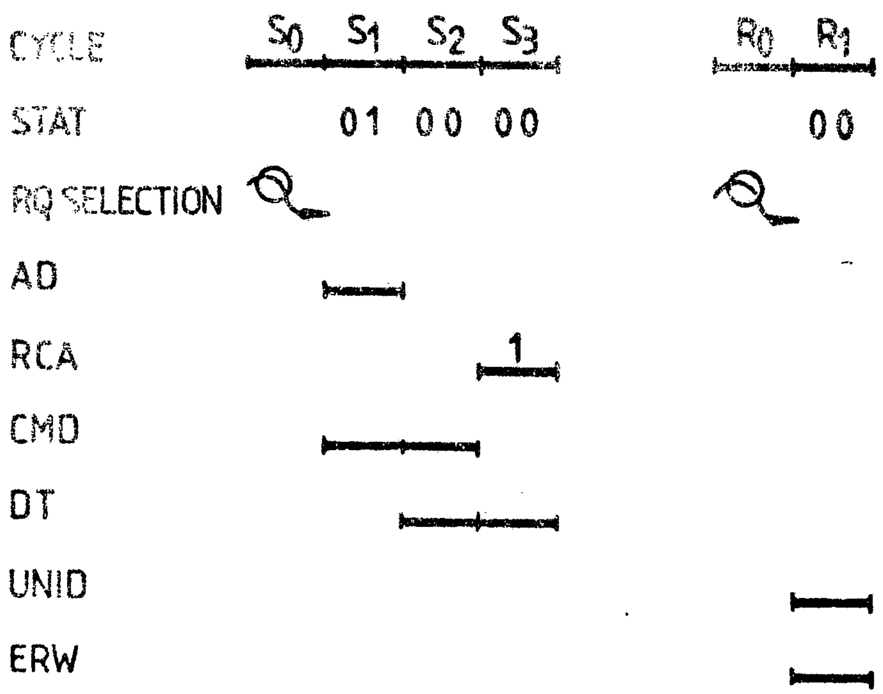
CYCLE
$S_0$ $S_1$ $S_2$ $S_3$
$R_0$ $R_1$
STAT
01 00 00
00
RQ SELECTION
AD
RCA
1
CMD
DT
UNID
ERW

FIG.15

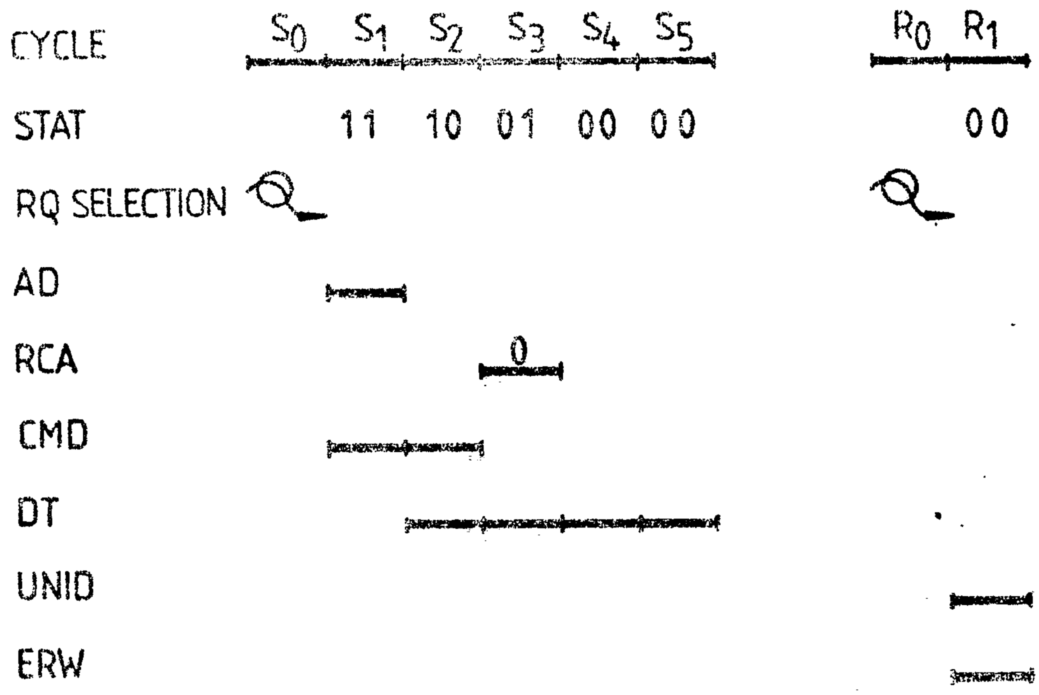
CYCLE
$S_0$ $S_1$ $S_2$ $S_3$ $S_4$ $S_5$
$R_0$ $R_1$
STAT
11 10 01 00 00
00
RQ SELECTION
AD
RCA
0
CMD
DT
UNID
ERW

FIG.16

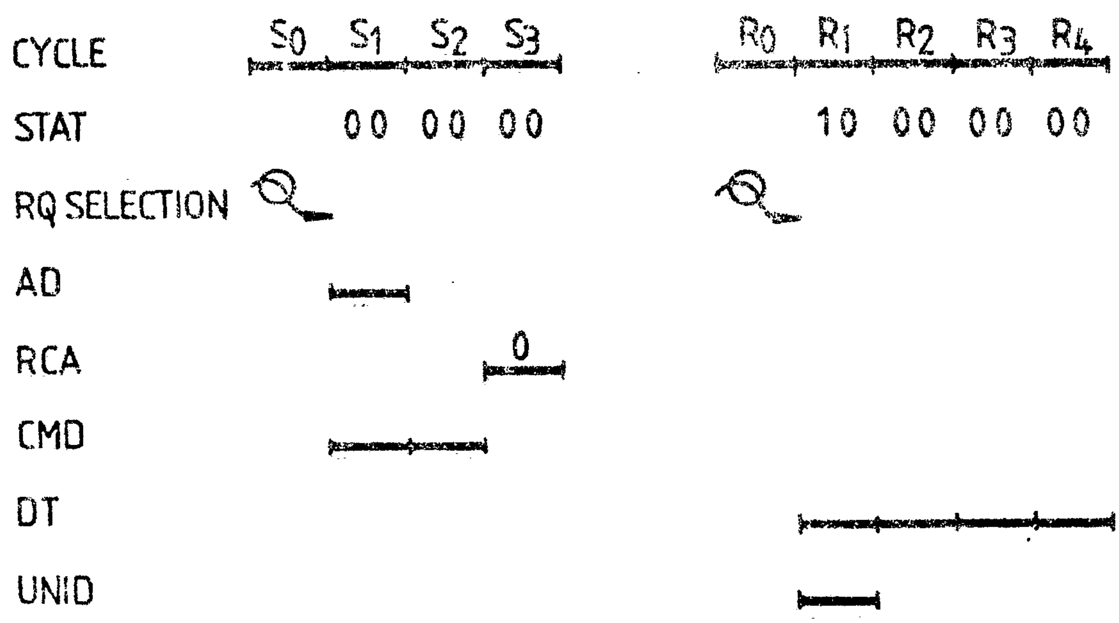
CYCLE
$S_0$ $S_1$ $S_2$ $S_3$
$R_0$ $R_1$ $R_2$ $R_3$ $R_4$
STAT
00 00 00
10 00 00 00
RQ SELECTION
AD
RCA
0
CMD
DT
UNID

FIG. 17